# EUROPEAN PATENT APPLICATION

(11) **EP 4 496 184 A1**
(43) Date of publication of application: **22.01.2025**
(21) Application number: 23398018.4
(22) Date of filing: 20.07.2023
(51) Int. Cl.: H02K 1/20, H02K 7/18, H02K 11/215

(54) **HALL SENSOR SYSTEM FOR AN ELECTRICAL MACHINE**

(71) Applicant: Siemens Gamesa Renewable Energy A/S, 7330 Brande (DK)
(72) Inventor: Amaral Freire, Nuno Miguel, 3150-109 Condeixa (PT); Godridge, Paul, Cheadle, Greater Manchester SK8 7HX (GB); Hansen, Anders Niels, 8870 Langaa (DK); Szczesny, Ireneusz Grzegorz, 7160 Tørring (DK); Tychsen, Rasmus, 6500 Vojens (DK); Wu, Zhan-Yuan, Sheffield S10 4BB (GB)
(74) Representative: SGRE-Association

(57) **Abstract**

It is described a Hall sensor system (120) for an electrical machine (100) having a radially inner stator (102) with stator windings (111) and a radially outer rotor (103) with permanent magnets (114), in particular of a wind turbine (1556), comprising: a body (121) including an insertion portion (122) extending in a longitudinal direction (107) and having an end surface (125) at a longitudinal end (124), wherein the insertion portion (122) is configured to be reversibly installable within a cooling opening (109a) of the stator (102); a Hall sensor (123) provided substantially at the longitudinal end (124) of the insertion portion (122), wherein the longitudinal direction corresponds to a radial direction (107), when the insertion portion (122) is installed within the cooling duct (109a).

## Description

### Field of invention

The present invention relates to a Hall effect sensor (hereafter named as Hall sensor) system for an electrical machine, further relates to a stator for an electrical machine, still further relates to an electrical machine and still further relates to a wind turbine comprising the electrical machine. Furthermore, the present invention relates to a method of determining an electrical rotor position using the Hall sensor system.

### Art Background

Conventionally, a high-resolution electrical rotor position is required for control of wind turbine permanent magnet generator (PMG). The aim is to use sensorless methods (back-emf based) employed for position estimation under power production mode (medium/high speed operation). For a low-speed range, a high-frequency signal injection based observers is used. However, the high frequency injection concept can be insufficient for surface mounted PM and fractional slot concentrated winding machines as these may not offer a clear enough position dependent signature, crucial for reliability of the sensorless method, forcing the adoption of sensors for position feedback.

One of the most reliable alternatives to the sensorless position observers is a method for employing Hall-effects sensors. The sensors are relatively cheap and reliable when comparing to alternatives, such as encoder-based solutions. This is especially true for large PM machines application where larger diameter makes encoder installation more sophisticated, expensive and/or less accurate.

Use of Hall sensors for control of electrical machines has been practiced before, particularly in BLDC motors where the size of a single machine is in kW range. Application of Hall effect sensors on large machines is not common due to several challenges. One of the main challenges is to achieve a required high precision of sensor location as well as tolerance to vibration. The key factor here is a fixation of the sensors which is often challenging due to large deviations in key dimensions, caused by large machine size and manufacturing tolerances. In a wind turbine application, especially for offshore turbines, ease of service of components is also an advantage in terms of maintaining power production and thus the simple methods of replacing a fault element are desirable.

For small and mid-size electrical machines Hall sensors are normally embedded into the stator winding or mounted on a PCB that is then attached to the machine stator. These concepts however are not applicable to large machines due to long distance between the sensors as well as lack of accessibility to stator windings in case of need for replacement. For example, in a large machine (especially that with low speed and high torque as in a direct drive), the winding packing factor is desirably to be as high as possible, and there would be hardly a room for Hall sensor installation; due to the requirement of high torque density, there would be no spare length of magnets left at the axial end of a machine to feature Hall sensor allocation; due to the high pole number in a machine and the environment of a wind turbine, the potential vibration would cause a significant amount of angle error if the sensor installation is less rigid such as that with a PCB board.

Therefore, the existing methods of Hall sensor installation would not meet the requirements in application of the wind turbines.

Thus, there may be a need for a Hall sensor system for an electrical machine, there may be a need for a stator for an electrical machine, there may be a need for an electrical machine and a need for a wind turbine, wherein at least some of the above-mentioned problems or disadvantages are mitigated or reduced.

### Summary of the Invention

According to an embodiment of the present invention, it is provided a Hall sensor system for an electrical machine having a radially inner or outer stator with stator windings and a radially outer or inner rotor with permanent magnets, in particular of a wind turbine, comprising: a body including an insertion portion extending in a longitudinal direction and having an end surface at a longitudinal end, wherein the insertion portion is configured to be reversibly installable within a cooling opening of the stator; a Hall sensor provided substantially at the longitudinal end (or tip) of the insertion portion, wherein the longitudinal direction corresponds to a radial direction, when the insertion portion is installed within the cooling duct.

The Hall sensor may be at the end of the portion which is inserted into the cooling duct.

The electrical machine may be a synchronous electrical machine, in particular a synchronous generator, in particular of a wind turbine.

One or more of the Hall sensor systems, when installed at or in the stator of the electrical machine, may be utilized for electrical rotor position determination. The electrical rotor position may then be utilized for controlling the electrical machine, in particular using vector control. The vector control may involve transformation and back-transformation between a fixed coordinate system being fixed to the electrical machine and a d-q-coordinate system, which synchronously rotates with the rotor of the electrical machine. For the respective transformation and back-transformation the electrical rotor position may be required.

The Hall sensor system may be utilized within an electrical machine having a radially inner or outer stator and having a radially outer or inner rotor with permanent magnets. Particular embodiments however relate to the Hall sensor system which is adapted to be used with an electrical machine having a radially inner stator and a radially outer rotor.

The insertion portion may be adapted regarding its geometry and structure to be inserted into a straight cooling opening, for example having a rectangular cross-sectional shape. The insertion portion may be the portion of the body which is completely inserted into the cooling opening, while other portions of the body potentially may protrude from the cooling opening, in particular in the longitudinal direction of the body (corresponding when installed to the radial direction of the generator). In the longitudinal direction the body may have an extent which is for example by a factor 5 to 20 greater than the extent of the body in any other direction traverse in particular perpendicular to the longitudinal direction.

The insertion portion is reversibly installable within the cooling opening of the stator in the sense that it can be inserted and removed in an easy manner. In particular, for installing the Hall sensor system no bolts or screws may be required for fixing the Hall sensor system to any component, such as the stator. Thereby, maintenance and/or replacement of the Hall sensor system in case of any failures or faults may be simplified. Further it may be advantageous to install the Hall sensor system in the cooling opening since a cooling opening is conventionally present or available in a conventional stator of large machines.

The stator may comprise plural other cooling openings (e.g. in teeth portions) which may for example be spaced apart in the axial and circumferential direction and which may be formed by recesses between tooth segments as will be explained below in further detail. Thus, the insertion of the Hall sensor system may only have a minimal impact on the cooling operation.

The end surface of the insertion portion may be close to an air gap between the stator and the rotor of the electrical machine in order to enable that the Hall sensor (provided substantially at the longitudinal end of the insertion portion) is capable of sensing the magnetic field as created by any of the permanent magnets of the rotor. The end surface may substantially be a plane or flat end surface, which may for example extend in the axial direction and the circumferential direction of the electrical machine, when the Hall sensor system is installed at the stator. The end surface, when the Hall sensor system is installed at the stator, may in particular be flush or may be slightly below a surface of a radially outer portion of the stator including the stator windings.

The Hall sensor may be configured to measure a magnetic field or magnetic flux which is parallel and/or perpendicular to the end surface of the insertion portion. The Hall sensor may be a sensor which detects the presence and magnitude of a magnetic field using the Hall effect. Thereby, the output voltage of the Hall sensor may be directly proportional to the strength of the magnetic field. A current may be applied to a thin strip of metal. In the presence of a magnetic field perpendicular to the direction of the current, the charge carriers are deflected by the Lorentz force, producing a difference in electric potential between the two sides of the strip. This voltage difference is proportional to the strength of the magnetic field and may be output by the Hall sensor as an indication of the strength or intensity of the detected magnetic field. The Hall sensor may be an analogue Hall sensor and/or a digital Hall sensor. The Hall sensor may for example comprise beside the basic equipment for determining or measuring the magnetic field, optionally also processing the raw measurement data, for example in order to output digital signals or substantially digital signals.

The Hall sensor system may in particular be applied or employed in cases of an electrical machine, where the machine stator winding and/or the permanent magnets are of limited access. The insertion body or the entire Hall sensor system may in particular be installed or inserted into the cooling opening from a radially inner side of the stator. Thereby installation in case of limited access to the stator windings or magnets may be simplified or enabled.

According to an embodiment of the present invention, the insertion portion comprises a winding contact surface, in particular extending in a width direction and a height direction both perpendicular to the longitudinal direction, to abut a radially inner surface of a stator winding, when the insertion portion is installed within the cooling opening, wherein the winding contact surface and the end surface of the insertion portion have a predetermined distance from each other along the longitudinal direction.

The contact surface may in particular be a substantially plane or flat contact surface. The width direction may correspond to the circumferential direction and the height direction may correspond to an axial direction of the electrical machine. The radially inner surface of the stator winding may be at the radial position where stator laminate material limits a stator slot.

When the Hall sensor system is installed at the stator, the end surface of the insertion portion and the winding contact surface have a predetermined distance from each other along the radial direction. Thereby, by abutting or contacting the contact surface with the radially inner surface of the stator winding, will bring the end surface of the insertion portion to a predetermined position, so that it can for example be ensured, that the end surface (at which substantially the Hall sensor is provided) is in a space region enabling to measure the magnetic field and also avoiding to protrude in the air gap. Thereby a precise positioning of the Hall sensor may be enabled, which may improve the measurement characteristics, in particular measurement sensitivity and specificity.

According to an embodiment of the present invention, the insertion portion comprises a first longitudinal portion (in particular radially inner portion) and a second longitudinal portion (e.g. radially outer portion), wherein the first longitudinal portion has a greater extent in a width direction than the second longitudinal portion and comprises the winding contact surface.

In the assembled stator having the Hall sensor system installed, the first longitudinal portion is radially at a more inner position than the second longitudinal portion. The second longitudinal portion may in particular extend at least along the entire radial extent of the winding and may in particular further protrude radially outwards beyond the radial outer end of the stator winding. The first longitudinal portion has a greater extent in the width direction (corresponding to the circumferential direction) than the second longitudinal portion, so that the contact surface or the winding contact surface can touch or abut to the radially inner surface of the stator winding. The second longitudinal portion may, when the Hall sensor system is installed at the stator, circumferentially adjacent to a circumferential side of the stator winding. Thereby, an exact positioning of the Hall sensor may be enabled.

The winding contact surface of the first longitudinal portion of the insertion portion may be at another circumferential position (position in the width direction) or region than the end surface of the second longitudinal portion of the insertion portion.

According to an embodiment of the present invention, the second longitudinal portion of the insertion portion comprises the end surface and comprises on one width (e.g. circumferential) side two or more winding contact protrusions to contact the stator winding at a circumferential side, wherein in particular a total contact area of the winding contact protrusions amounts to 1 % to 5 % of an area of the circumferential side of the winding.

The winding contact protrusions may contact or touch, meaning in physical contact, with the side or portions of the circumferential side of the stator winding. In regions radially in-between the winding contact protrusions, in the installed case, a small free space may be present. Thus, potentially present irregularities of the planarity of the circumferential surface of the stator winding may not interfere with installation.

According to an embodiment of the present invention, the second longitudinal portion of the insertion portion provides elastic property in a width direction transverse, in particular perpendicular to the longitudinal direction, which corresponds to a circumferential direction when the Hall sensor system is installed at the stator; the elastic property enabling to reversibly fix the system within the cooling opening by force-fit and/or shape-fit, wherein the elastic property is in particular realized by at least one of the following: one of more wedges and/or protrusions, in particular at ends of the second longitudinal portion; elastic/reversibly deformable material added to the second longitudinal portion; a spring and/or a bulge and/or a protrusion and/or a recess and/or a through hole provided at the second longitudinal portion.

The elastic property may enable to clamp the insertion portion between the stator winding and a structure belonging to the stator or to an adjacent stator winding. The elastic property may be realized by a number of different structural features, in order to provide great flexibility in the construction of the Hall sensor system.

According to an embodiment of the present invention, the second longitudinal portion of the insertion portion comprises on another width (e.g. circumferential) side at least one elastic member, in particular comprising rubber and/or a deformable protrusion, to contact a cooling opening limiting wall (or another winding in another slot) and to exert a force in the width (e.g. circumferential) direction, wherein the second longitudinal portion of the insertion portion is in particular configured to be clamped between the stator winding and the cooling opening limiting wall (spacer) (or another winding in another slot) by elastic force.

The cooling opening between circumferentially adjacent stator windings or wire portions may be divided by a cooling opening limiting wall which may extend in the radial direction and the axial direction in order to divide the free space between the two stator windings in two cooling openings (in particular having same or substantially same cross-sectional shape). The cooling opening limiting wall may be provided to avoid collapse or deformation of the intended or required shape of the cooling opening during manufacturing involving lamination of the stator.

If the cooling opening limiting wall is not present, the respective insertion portion has a greater extent in the width direction, in order to contact at the other width side another winding in another circumferentially adjacent slot. Thereby, great flexibility may be provided. Further, due to the presence of the elastic member, the Hall sensor system may be fixed by force-fit into the cooling opening.

According to an embodiment of the present invention, a projection of the second longitudinal portion of the insertion portion along the longitudinal direction has a rectangular shape substantially corresponding to a cross sectional shape of the cooling opening.

The conventional cooling opening may also have a rectangular shape and therefore, insertion of the insertion portion into the cooling opening may be facilitated.

According to an embodiment of the present invention, the body further includes a protrusion portion extending in the longitudinal direction from the first longitudinal portion of the insertion portion to protrude from a radially inner surface of the stator radially inwards, when the Hall sensor system is installed at the cooling duct.

The protrusion portion may facilitate handling of the Hall sensor system by a technician for example. The radially inner side of the stator may be accessible by a technician, thereby enabling to insert or withdraw, i.e. reversibly install the Hall sensor system.

According to an embodiment of the present invention, the system further comprises a cover member and a mounting member (in particular a mounting magnet), wherein the cover member is configured to be put on or over the protrusion portion and the mounting member is configured to provide a holding force between the cover member and a radially inner portion of the stator, in order to hold the Hall sensor system in the radial direction.

The mounting member may comprise mechanical mounting items, like a bolt, clamp.

The cover member may protect the Hall sensor system from a mechanical damage. Further, due to the mounting member, the Hall sensor system may be hold or fixed in the radial direction in order to avoid that the Hall sensor system slides or falls out in the radially inner direction from the cooling opening. Thereby secure fixation in the radial direction may be ensured also in case of extensive vibration.

The clamping features or contact protrusions and the elastic material provided in the insertion portion of the Hall sensor system may ensure a fixation in the circumferential direction and also partly in the radial direction by force-fit. The contact protrusions and the elastic material of the circumferential sides of the insertion portion may provide secure fixation due to form-fit.

According to an embodiment of the present invention, wherein the insertion portion and protrusion portion are integrally formed, Hall sensor in particular embedded /encapsulated into the insertion portion; and/or an extent of the body in the longitudinal direction is between 5 and 20 times of an extent in at least one direction transverse, in particular perpendicular, thereto; and/or the body being formed from non-magnetic, non-conductive, in particular high temperature resistant material, in particular plastic material.

According to an embodiment of the present invention, further the protrusion portion providing a handling portion of the body, in order to facilitate insertion of the system into the cooling opening and/or withdrawal of the system out of the cooling opening by a person.

The handling portion may include a grip and may also in particular embodiments comprise a through-hole in which for example a human finger can be inserted for easily withdrawing or inserting the Hall sensor system into or out of the cooling opening. Thereby installation or a deinstallation may be simplified.

The body may for example be formed from any thermosetting or thermoplastic material for example Techtron, HPV).

The body or the entire Hall system may for example be configured to withstand or operate at temperatures between -20°C and 180°C.

According to an embodiment of the present invention, it is provided a stator for an electrical machine having a radially outer rotor with permanent magnets, in particular of a wind turbine, comprising: a stator yoke with plural radially outwards protruding teeth and slots in between, the teeth and slots extending in the axial direction, the teeth being formed by axial tooth segments being spaced apart in the axial direction thereby forming cooling openings between adjacent tooth segments; in particular cooling opening limiting walls or dividing walls between respective two adjacent tooth portions to divide a space between two adjacent tooth portions in two parts, each part forming a cooling opening stator windings partially arranged within the slots; at least one Hall sensor system according to one of the preceding claims inserted in one of the cooling openings.

The stator may in particular comprise at least three Hall sensor systems installed at different positions (or air ducts) in circumferential direction such that the Hall sensor systems are spaced apart by particular electrical angles, such as 60° or 120°. Thereby, the Hall sensor systems may be employed for electrical rotor position determination.

According to an embodiment of the present invention, it is provided an electrical machine, comprising: a stator according to the preceding embodiment; an outer or inner rotor rotatably supported relative to the stator.

The electrical machine may for example be configured as a generator, in particular synchronous generator.

According to an embodiment of the present invention, it is provided a wind turbine, comprising: an electrical machine according to the preceding embodiment; a hub having plural rotor blade mounted, wherein the hub is coupled with the rotor of the electrical machine.

It should be understood that features, individually or in any combination, disclosed, described, explained or provided for a Hall sensor system may also, individually or in any combination be provided, employed or applied to a method for installing a Hall sensor system according to embodiment of the present invention and vice versa.

According to an embodiment of the present invention, it is provided a method for installing a Hall sensor system for an electrical machine having a radially inner or outer stator with stator windings and a radially outer or inner rotor with permanent magnets, in particular of a wind turbine, the Hall sensor system comprising: a body including an insertion portion extending in a longitudinal direction and having an end surface at a longitudinal end; a Hall sensor provided substantially at the longitudinal end of the insertion portion, the method comprising: inserting the insertion portion along the longitudinal direction into a cooling opening of the stator, such that the Hall sensor is positioned to sense a magnetic field generated by a permanent magnet of the rotor, wherein the longitudinal direction corresponds to a radial direction of the electrical machine.

Embodiments of the present invention are now described with reference to the accompanying drawings. The invention is not restricted to the illustrated or described embodiments.

### Brief Description of the Drawings

Fig. 1 schematically illustrates a portion of an electrical machine according to an embodiment of the present invention in a sectional view along an axial direction;
Fig. 2 schematically illustrates the portion of the electrical machine stator illustrated in Fig. 1 views along the radial direction from a radially outer side;
Fig. 3 illustrates the electrical machine stator in a view along the radial direction from a radially inner side;
Fig. 4 schematically illustrates a portion of an electrical machine according to an embodiment of the present invention;
Figs 5 and 6 illustrate Hall sensor systems according to embodiments of the present invention, which may for example be utilized in the stator as illustrated in Figs. 1, 2, 3, 4;
Figs. 7 and 8 illustrate Hall sensor systems according to embodiments of the present invention;
Fig. 9 schematically illustrates a portion of an electrical machine according to an embodiment of the present invention before insertion of a Hall sensor system;
Fig. 10 schematically illustrates a method of inserting a Hall sensor system according to an embodiment of the present invention;
Fig. 11 illustrates a portion of an electrical machine having inserted a Hall sensor system according to an embodiment of the present invention;
Fig. 12 schematically illustrates an electrical machine according to an embodiment of the present invention having inserted a Hall sensor system according to an embodiment of the present invention;
Fig. 13 illustrates a schematic view from a radially outer side of a portion of an electrical machine stator according to an embodiment of the present invention;
Fig. 14 illustrates measurement results as obtained by three Hall sensor systems installed in an electrical machine according to an embodiment of the present invention;
Fig. 15 schematically illustrates a wind turbine according to an embodiment of the present invention.

### Detailed Description

It should be appreciated that features or structures similar in structure and/or function illustrated in different figures, may be labelled with reference signs differing only in the first digit. A description of one particular feature not described in detail with respect to a particular embodiment may be taken from the description of this element in the context of other embodiments or figures.

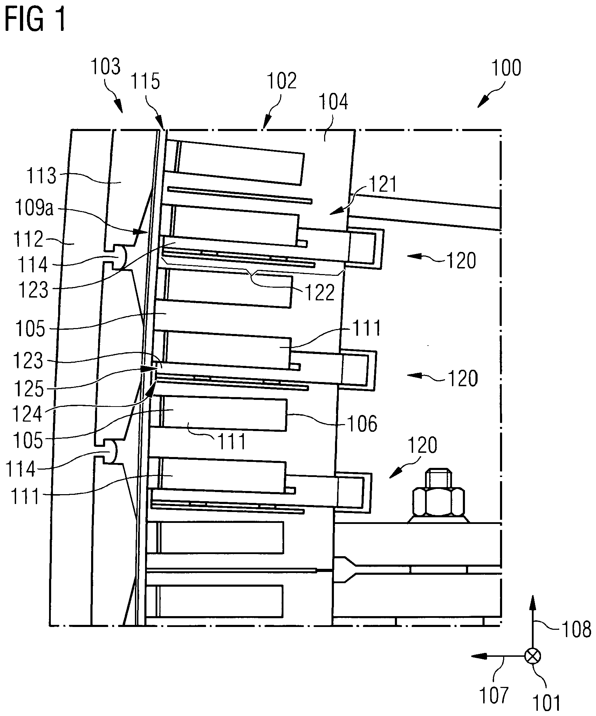

**Fig. 1** schematically illustrates in a cross-sectional view perpendicular to an axial direction 101 an electrical machine 100 according to an embodiment of the present invention in a partial view. In Fig. 1, the radial direction 107 and the circumferential direction 108 are indicated which are both perpendicular to the axial direction 101. The electrical machine 100 comprises a stator 102 according to an embodiment of the present invention and an outer rotor 103, which is rotatably supported relative to the stator 102. The rotor 103 comprises a rotor house 112 having mounted thereon radially inwards protruding permanent magnets 113 which are inserted in holding tracks 114, which extend in the axial direction 101. Between the stator 102 and the rotor 103 an air gap 115 is present, which typically has an extent between 5 mm and 8 mm.

The stator 102 of the electrical machine 100 comprises a stator yoke 104 with plural radially outwards protruding teeth 105 and slots 106 in-between.

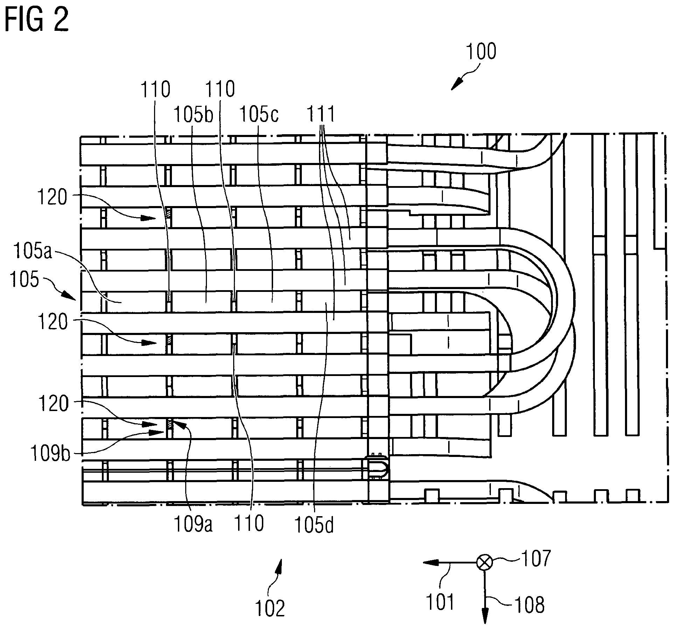

As can be seen in **Fig. 2****,** illustrating the electrical machine 100 viewed along the radial direction 107 when looking from outer side, the teeth 105 are formed by axial tooth segments 105a, b, c, d, ..., which are spaced apart in the axial direction 101 thereby forming cooling openings 109 between adjacent tooth segments for example 105a, 105b.

In the embodiment illustrated in Fig. 1 and 2, the stator further comprises cooling opening limiting walls or cooling opening dividing walls 110 between respective two adjacent tooth portions, for example 105a, 105b, to divide a space between two adjacent tooth portions into two parts, each part forming a cooling opening for example 109a, 109b. The electrical machine or in particular the stator 102 further comprises stator windings 111 which are partially arranged within the slots 106.

The electrical machine 100 illustrated in Figs. 1 and 2 further comprises at least one Hall sensor system 120 (in particular three Hall sensor systems 120) according to an embodiment of the present invention, which is inserted in one of the cooling openings for example in the cooling opening 109a.

Each of the Hall sensor systems 120 of the electrical machine 100 comprises a body 121 including an insertion portion 122 which extends in the longitudinal direction (being co-linear with the radial direction 107), wherein the insertion portion 122 is configured to be reversibly installable within a cooling opening 109a of the stator 102. A Hall sensor 123 is provided substantially at the longitudinal end 124 of the insertion portion. The insertion portion 122 has an end surface 125 at the longitudinal end 124.

The longitudinal direction of the insertion portion 122 or the body 121 corresponds to the radial direction 107 when the insertion portion 122 is installed within the cooling duct 109a.

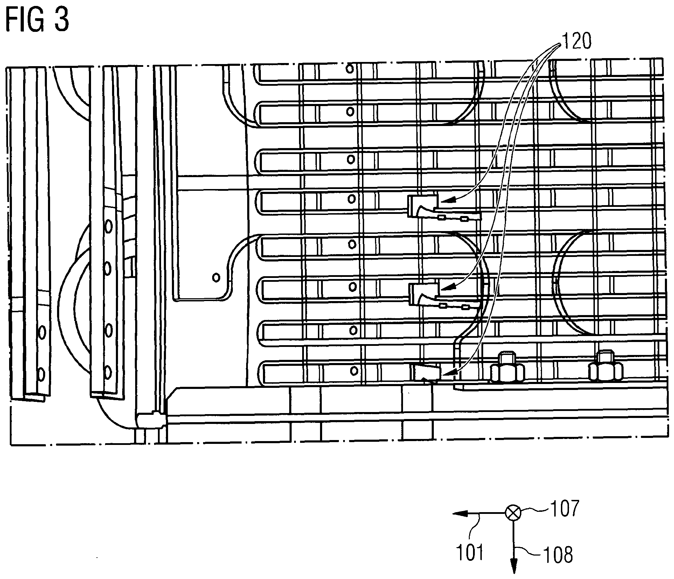

**Fig. 3** illustrates the electrical machine 100 in a partially perspective view seen along the radial direction 107 when looking from radially inner side.

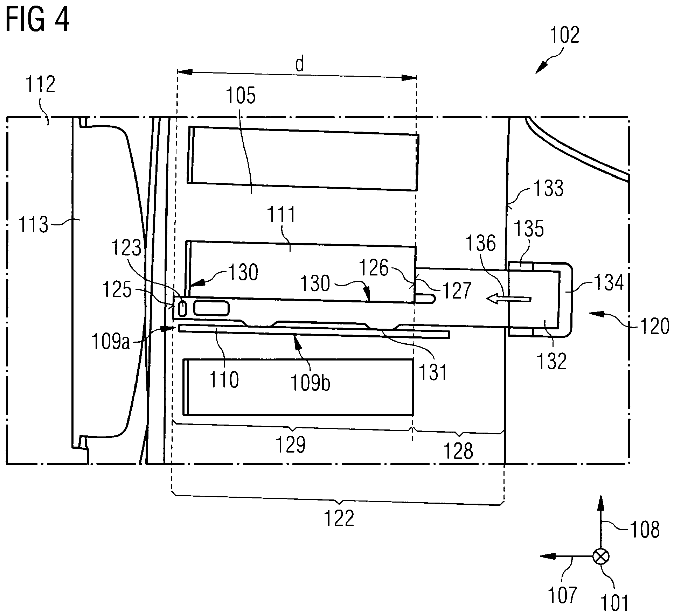

**Fig. 4** illustrates the Hall sensor system 120 illustrated in Fig. 1, 2 and 3 in a cross-sectional view taking perpendicular to the axial direction 101 in more detail. The insertion portion 122 comprises a winding contact surface 126 which extends in a width direction (co-linear with the circumferential direction 108) and extending in a height direction (co-linear with the axial direction 101) which are both perpendicular to the longitudinal direction and co-linear with the radial direction 107, in order to abut (or contact) a radially inner surface 127 of a stator winding 111, when the insertion portion 122 is installed within the cooling opening 109a.

The winding contact surface 126 and the end surface 125 of the insertion portion 122 have a predetermined distance d from each other along the longitudinal direction (being co-linear with the radial direction 107).

The insertion portion 122 comprises a first longitudinal portion 128 (in particular radially inner portion), a second longitudinal portion 129, wherein the first longitudinal portion 128 has a greater extent in the width direction (being co-linear with the circumferential direction 108) than the second longitudinal portion 129 and the first longitudinal portion 128 comprises the contact surface 126. The second longitudinal portion 129 of the insertion portion 122 comprises the end surface 125 and comprises on one width (circumferential) side (in Fig. 4 the upper side) two or more winding contact protrusions (or wedges) 130 to contact the stator winding 111 at a circumferential side (in Fig. 4 the lower side).

The second longitudinal portion 129 of the insertion portion 122 further provides an elastic property in the width direction transverse in particular perpendicular to the longitudinal direction which corresponds to the circumferential direction when the Hall sensor system 120 is installed at the stator as is illustrated in Fig. 4. The elastic property is provided by wedges and/or protrusions 130 and/or elastic/reversibly deformable material or a spring or a bulge or a protrusion.

The second longitudinal portion 129 of the insertion portion 122 comprises on another width (circumferential) side (in Fig. 4 the lower side) at least one elastic member 131 for example comprising a rubber and/or a deformable protrusion, to contact a cooling opening limiting wall 110 (or another winding 111 in another slot) and to exert a force in the width (circumferential) direction 108.

As can be seen for example in Fig. 4, the second longitudinal portion 129 of the insertion portion 122 is clamped between the stator winding 111 and the cooling opening limiting wall 110 (also referred to as "spacer element") by an elastic force in order to provide force-fit in the radial direction and form-fit in the circumferential direction 108.

As can be appreciated for example in Fig. 2, the cross-sectional shape of the cooling opening 109a is trapezoidal, almost rectangular. The same or similar shape, namely a rectangular shape, has the projection of the second longitudinal portion 129 when the projection is taken along the longitudinal direction (being co-linear with the radial direction 107) .

The body 121 of the Hall sensor system 120 further comprises a protrusion portion 132 extending in the longitudinal direction from the first longitudinal portion 128 of the insertion portion 122 to protrude from the radially inner surface 133 of the stator 102, when the Hall sensor system 120 is installed at the cooling duct 109a.

The Hall sensor system 120 further comprises a cover member 134 and a mounting member 135 (in particular mounted to each other) and the cover member 134 is configured to be put on or over the protrusion portion 132 and the mounting member 135 (in particular magnet) is configured to provide a holding force 136 between the cover member 134 and a radially inner portion of the stator 102, in order to hold the Hall sensor system 120 in the radial direction 107. The protrusion portion 132 may be configured as a handling portion, in order to facilitate installation of the system into the cooling opening and/or withdrawal of the system out of the cooling opening 109a by a person.

Embodiments of the present invention provide for fixation of a Hall effect sensor inside a cooling duct of large permanent magnet electrical machines, in particular where access to the machine stator winding and/or magnets is limited or not possible. The Hall effect sensors 123 are mounted at the body 121 (also referred to as "bracket", in particular "non-magnetic bracket") that can be (partially) inserted into the inner side of the stator towards the outer side (the air gap). This may allow installation or replacement of the sensor without direct access to the machine winding or magnets.

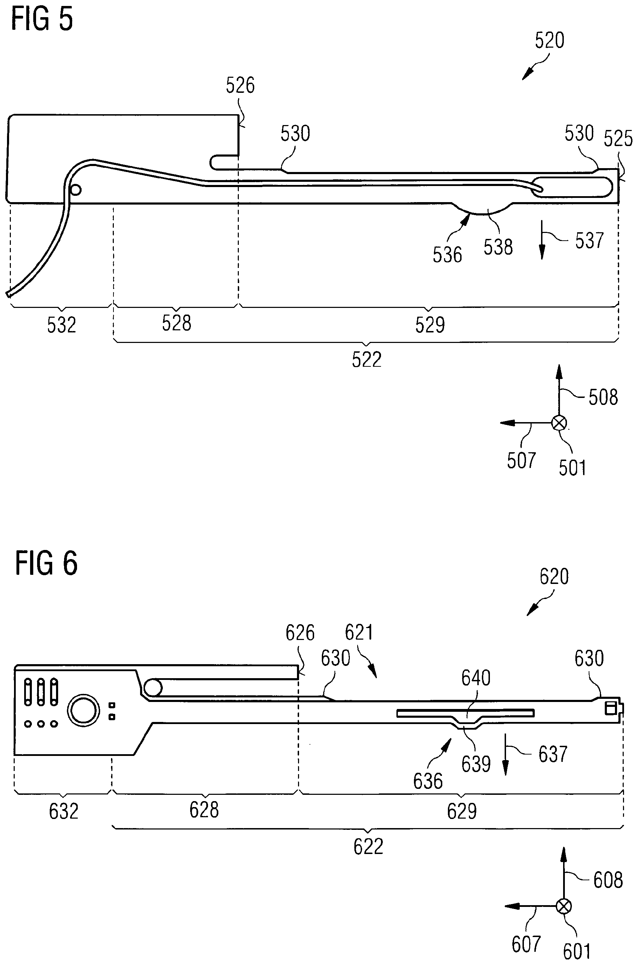

The body (also referred to as "bracket") may be equipped with a single or dual spring that pushes the sensor against the side of the stator winding. Such a fixation may allow to keep the sensor attached to the most accurate reference point and thereby offers the highest possible position accuracy in the circumferential direction. The spring effect can be accomplished by either manufacturing a special shape of the bracket (or body 121) or by adding elastic material to the edge of the sensor or the body, those approaches being illustrated in Figs. 5 and 6.

Thereby, **Figs. 5 and 6** schematically illustrate Hall sensor systems 520, 620 according to embodiments of the present invention as viewed along a height direction 501, 601 which corresponds to the axial direction when installed at the stator. The width direction is indicated with reference signs 508, 608, respectively and the longitudinal direction is indicated with reference signs 507, 607, respectively.

The second longitudinal portion 529 of the insertion portion 522 of the Hall sensor system 520 illustrated in Fig. 5 comprises the end surface 525 and comprises one width side (in Fig. 5 the upper side), the winding contact protrusions (or wedges) 530 that contact a stator winding at a circumferential side. Similar winding contact protrusions or wedges 630 are provided at the Hall sensor system 620 illustrated in Fig. 6.

The second longitudinal portion 529 of the insertion portion 522 of the Hall sensor system 520 comprises at another width side (in Fig. 5 and 6 the lower side) at least one elastic member 536, 636, to contact a cooling opening limiting wall (for example wall 110 illustrated in Fig. 4) or another winding in another slot and to exert a force 537, 637 in the width direction 508, 608, respectively.

In the embodiment 520 illustrated in Fig. 5, the elastic member 536 is configured as a rubber protrusion 538. In the embodiment 620 illustrated in Fig. 6, the elastic member 536 is configured as a deformable protrusion 639 which is flexible due to the recess or through-hole 640 within the body 621.

In case of the presence of impurities or uneventies after manufacturing process (for example painting) inside the cooling opening, the bracket (or body) may be designed with wedges. The wedges may limit touch surface between the sensor and the winding side surface in order to reduce a likelihood that any impurities cause additional position error between the winding and the sensor in the circumferential direction. The wedges and springs and their functions are presented in the Figs. 5, 6 and also 4.

The distance pin (including the winding contact surface 526, 626) prevents the sensor to be pushed too far out into the air gap which might result in damage of the sensor by being hit by passing magnets on the rotor.

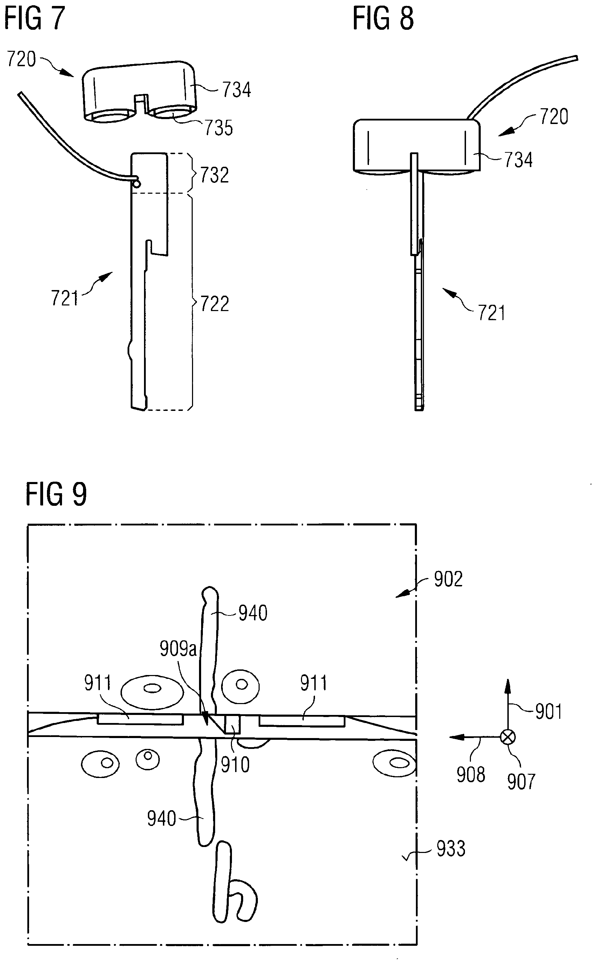

**Figs. 7 and 8** illustrate a Hall sensor system 720 according to an embodiment of the present invention including a body 721 and a cover member 734 as well as mounting member (in particular, magnets) 735. The cover member 734 including the magnets 735 may be put over the protrusion portion 732 of the body 721, as is illustrated in Fig. 8. Thus, the body or bracket may be equipped with a magnetic cap that prevents the sensor from sliding out as well as to prevent the bracket from external mechanical damage, such by stepping onto the sensor by a service crew. This design could also help to secure the sensor location in the radial direction, thus, the sensing of electromagnetic field of the magnets. If the sensor becomes faulty or is to be located at a different position, the magnet cap can be removed and the bracket can be extracted so that the sensor or the whole bracket can be replaced.

**Figs. 9****,** **10** **and** **11** illustrate a mounting process of a sensor system at a stator according to an embodiment of the present invention. Thereby, Fig. 9 illustrates a radially inner stator surface 933 of a stator as seen along a radial direction 907 and a stator winding 911 and a cooling opening limiting wall 910. The selected cooling opening 909a is marked with a paint 940 indicating the desired position of the Hall sensor system.

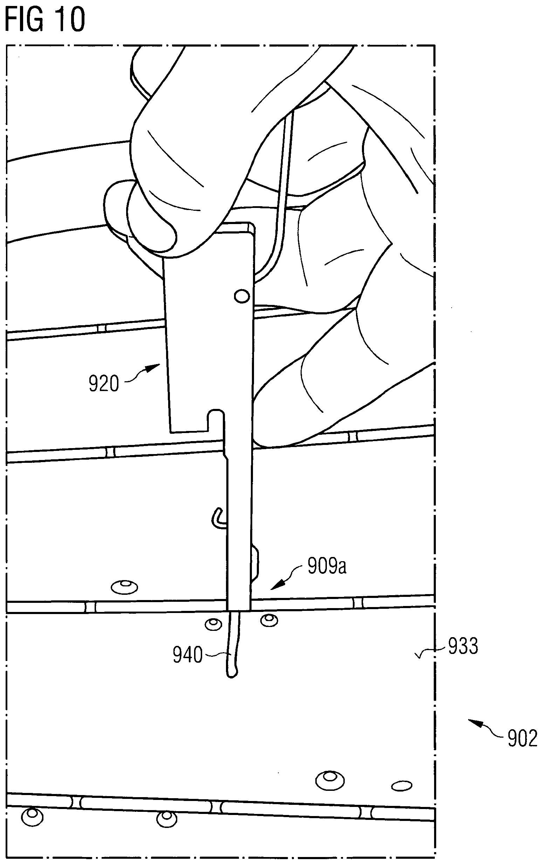

**Fig. 10** illustrates a step of inserting the Hall sensor system 920 into the selected cooling opening 909a of the stator 902.

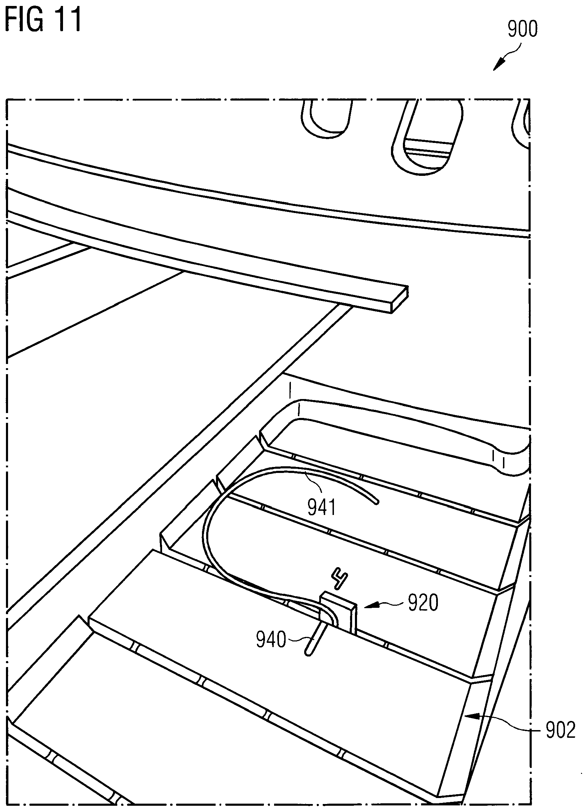

**Fig. 11** illustrates the situation when the Hall sensor system 920 is completely inserted into the cooling opening. A sensor signal cable 941 is provided to carry measurement signals to any processing or control equipment. The mounting or insertion of the Hall sensor system is from the inner side of the stator. The air duct, where the sensor is to be inserted is identified and marked with the paints or the painting 940.

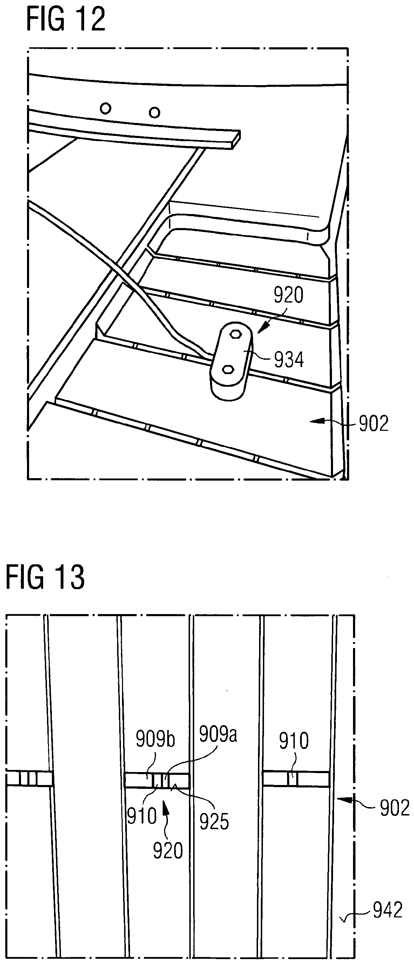

As a final installation step, the cover 934 and the mounting magnets are put over the inserted body to result in the situation as illustrated in **Fig. 12****.**

**Fig. 13** is a schematic illustration of the radially outer side of the stator 902 after the Hall sensor system 920 is installed within the cooling duct 909a. The end surface 925 is ideally flat with the radially outer surface 942 of the stator 902. In the assembled electrical machine, the rotor would be positioned to be above the drawing plane illustrated in Fig. 13.

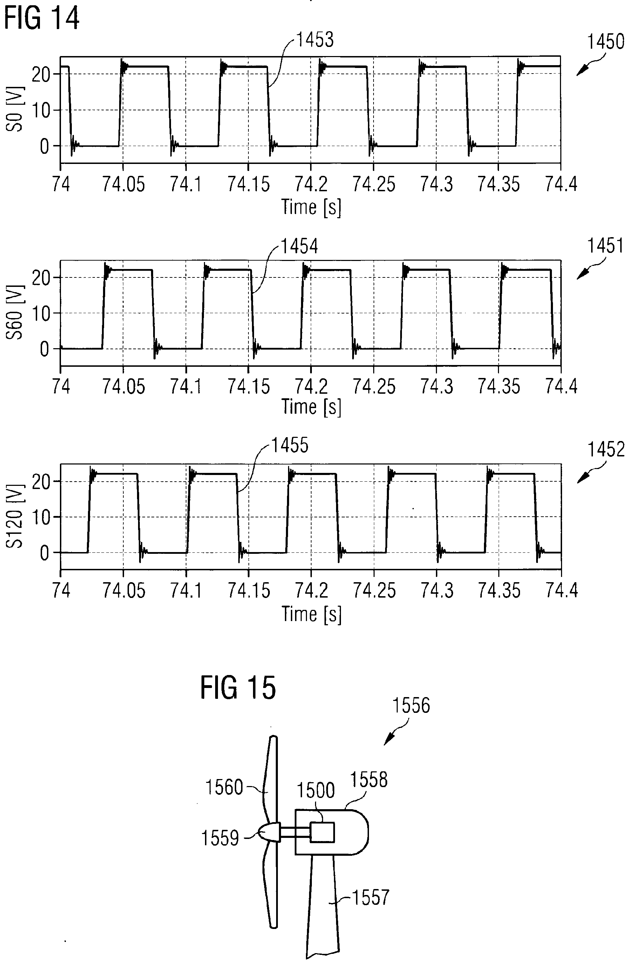

**Fig. 14** illustrates graphs 1450, 1451, 1452 relating to three Hall sensor systems installed in an electrical machine and for measuring magnetic field or magnetic flux for rotor position determination. The abscissas indicate time and the ordinates indicate strength of detected signal. The curves 1453, 1454, 1455 illustrate the detected strength of the magnetic field of three Hall sensor systems spaced apart by an electrical angle (e.g. 120° or 60°). It can be seen that each sensor has a duty cycle (i.e. 50%).

**Fig. 15** schematically illustrates a wind turbine 1556 according to an embodiment of the present invention, which comprises a wind turbine tower 1557 and a nacelle 1558 mounted on top of the tower. The nacelle 1558 harbours a generator 1500 according to an embodiment of the present invention, which is mechanically connected to a hub 1559 at which plural rotor blades 1560 are mounted.

In a typical generator design with distributed winding, the angle displacement between the stator teeth and thus the air ducts) is 60 electrical degrees. The usual 120° degree angle shift among the three Hall sensors, the sensors may have to be installed in three alternating air ducts. They may restricted physically due to the particular stator segment assembly. Between the Hall sensors the combinations with 60° are also acceptable and the only change is in the software configuration. This would enable a flexible air duct selection for sensor installation in case of trouble to replace a sensor at the same air duct, a new air duct can be chosen easily.

Embodiments of the present invention may provide the following advantages:
A simple and robust solution for precise installation of sensors inside large permanent magnet machines
a mechanism capable of easy replacement of a faulty sensor
a solution with high resistance to vibration in large permanent magnet machines
an installation method of little intrusion to the machine assembly and little impact to machine performance
capability of sensor flexible installation and reconfiguration.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

## Claims

1. Hall sensor system (120) for an electrical machine (100) having a radially inner or outer stator (102) with stator windings (111) and a radially outer or inner rotor (103) with permanent magnets (114), in particular of a wind turbine (1556), comprising:
a body (121) including an insertion portion (122) extending in a longitudinal direction (107) and having an end surface (125) at a longitudinal end (124), wherein the insertion portion (122) is configured to be reversibly installable within a cooling opening (109a) of the stator (102);
a Hall sensor (123) provided substantially at the longitudinal end (124) of the insertion portion (122),
wherein the longitudinal direction corresponds to a radial direction (107), when the insertion portion (122) is installed within the cooling duct (109a).

2. System according to the preceding claim, wherein the insertion portion (122) comprises a winding contact surface (126), in particular extending in a width direction and a height direction both perpendicular to the longitudinal direction, to abut a radially inner surface (127) of a stator winding (111), when the insertion portion is installed within the cooling opening,
wherein the winding contact surface (126) and the end surface (125) of the insertion portion (122) have a predetermined distance (d) from each other along the longitudinal direction (107) .

3. System according to one of the preceding claims, wherein the insertion portion (122) comprises a first longitudinal portion (128), and a second longitudinal portion (129), wherein the first longitudinal portion (128) has a greater extent in a width direction (108) than the second longitudinal portion (129) and comprises the winding contact surface (126) .

4. System according to one of the preceding claims, wherein the second longitudinal portion (129) of the insertion portion (122) comprises the end surface (125) and comprises on one width, in particular circumferential, side two or more winding contact protrusions (130) to contact the stator winding (111) at a circumferential side,
wherein in particular a total contact area of the winding contact protrusions is limited to 1 % to 5 % of an area of the circumferential side of the winding.

5. System according to one of the preceding claims,
wherein the second longitudinal portion (129) of the insertion portion (122) provides elastic property in a width direction transverse, in particular perpendicular to the longitudinal direction, which corresponds to a circumferential direction when the Hall sensor system is installed at the stator;
the elastic property enabling to reversibly fix the system within the cooling opening by force-fit and/or form-fit, wherein the elastic property is in particular realized by at least one of the following:
one or more wedges (130) and/or protrusions, in particular at ends of the second longitudinal portion;
elastic/reversibly deformable material (131) added to the second longitudinal portion (129);
a spring and/or a bulge and/or a protrusion and/or a recess and/or a through hole provided at the second longitudinal portion (129).

6. System according to one of the preceding claims, wherein the second longitudinal portion (129) of the insertion portion (122) comprises on another width side at least one elastic member (131), in particular comprising rubber and/or a deformable protrusion, to contact a cooling opening limiting wall (110) or another winding (111) in another slot and to exert a force in the width direction (108),
wherein the second longitudinal portion (129) of the insertion portion (122) is in particular configured to be clamped between the stator winding and the cooling opening limiting wall (110) or another winding (111) in another slot by elastic force.

7. System according to one of the preceding claims, wherein a projection of the second longitudinal portion (129) of the insertion portion (122) along the longitudinal direction (107) has a rectangular shape substantially corresponding to a cross sectional shape of the cooling opening (109a).

8. System according to one of the preceding claims, the body further including:
a protrusion portion (132) extending in the longitudinal direction (107) from the first longitudinal portion (128) of the insertion portion (122) to protrude from a radially inner surface (133) of the stator (102) radially inwards, when the Hall sensor system (120) is installed at the cooling duct (109a) .

9. System according to the preceding claim, further comprising:
a cover member (134) and a mounting member (135),
wherein the cover member (134) is configured to be put on or over the protrusion portion (132) and the mounting member (135) is configured to provide a holding force between the cover member and a radially inner portion of the stator (102), in order to hold the Hall sensor system in the radial direction,
wherein the mounting member in particular comprises a mounting magnet (135).

10. System according to one of the preceding claims,
wherein the insertion portion (122) and protrusion portion (132) are integrally formed, Hall sensor in particular embedded /encapsulated into the insertion portion; and/or
an extent of the body in the longitudinal direction is between 5 and 20 times of an extent in at least one direction perpendicular thereto; and/or
the body (121) being formed from non-magnetic, non-conductive, in particular high temperature resistant material, in particular plastic material.

11. System according to one of the preceding claims, further the protrusion portion (132) providing a handling portion of the body, in order to facilitate insertion of the system into the cooling opening and/or withdrawal of the system out of the cooling opening by a person.

12. Stator (102) for an electrical machine (100) having a radially outer rotor with permanent magnets, in particular of a wind turbine, comprising:
a stator yoke with plural radially outwards protruding teeth (105) and slots (106) in between, the teeth and slots extending in the axial direction (101), the teeth being formed by axial tooth segments (105a,b,c,d) being spaced apart in the axial direction (101) thereby forming cooling openings (109) between adjacent tooth segments;
in particular cooling opening limiting walls (110) or dividing walls between respective two adjacent tooth portions to divide a space between two adjacent tooth portions in two parts (109a,b), each part forming a cooling opening;
stator windings (111) partially arranged within the slots (106);
at least one Hall sensor system (120) according to one of the preceding claims inserted in one of the cooling openings (109a).

13. Electrical machine (100), comprising:
a stator (102) according to the preceding claim;
an outer rotor (103) rotatably supported relative to the stator.

14. Wind turbine (1556), comprising:
an electrical machine (1500) according to the preceding claim;
a hub (1559) having plural rotor blades (1560) mounted, wherein the hub (1559) is coupled with the rotor (103) of the electrical machine (1500).

15. Method for installing a Hall sensor system (120) for an electrical machine (100) having a radially inner stator (102) with stator windings (111) and a radially outer rotor (103) with permanent magnets (113), in particular of a wind turbine,
the Hall sensor system comprising:
a body (121) including an insertion portion (122) extending in a longitudinal direction (107) and having an end surface (125) at a longitudinal end (124);
a Hall sensor (123) provided substantially at the longitudinal end (124) of the insertion portion (122),
the method comprising:
inserting the insertion portion (122) along the longitudinal direction into a cooling opening (109a) of the stator (102), such that the Hall sensor (123) is positioned to sense a magnetic field generated by a permanent magnet (113) of the rotor,
wherein the longitudinal direction corresponds to a radial direction (107) of the electrical machine.

16. Method of installing at least three Hall sensor systems to an electrical machine, the method comprising:
selecting at least three cooling openings (109a) of the stator (102) which are mutually displaced by 120° or 60° in electrical angle;
performing for each of the selected cooling openings a method according to the preceding claim 15.
